# EUROPÄISCHE PATENTANMELDUNG

(11) **EP 0 964 354 A2**
(43) Veröffentlichungstag der Anmeldung: **15.12.1999**
(21) Anmeldenummer: 99103259.0
(22) Anmeldetag: 19.02.1999
(51) Int. Cl.: G06K 11/18

(54) **Handschreibgerät und Touch-Pen-Element für ein solches Handschreibgerät**

(30) Priorität: 20.02.1998 DE 29802841 U
(71) Anmelder: Curths Praxis Marketing GmbH, 60599 Frankfurt a.M. (DE)
(72) Erfinder: Curths, Beate, 63069 Offenbach (DE)
(74) Vertreter: Schneeweiss, Manfred

(57) **Zusammenfassung**

Handschreibgerät mit mindestens zwei wechselweise einsetzbaren Schreibspitzen, von denen mindestens eine Schreibspitze die Spitze einer Farbstoff oder Farbpigment abgebenden Mine ist.

Ferner ein Touch-Pen-Element mit einer Druckspitze, welches in solch ein Handschreibgerät einsetzbar ist. Diese Druckspitze ist im wesentlichen zur Eingabe auf druckempfindlichen Flächen, d.h. Flächen auf welchen die Eingabe durch druckelektronische Übertragung erfolgt, sogenannten Computerdisplays oder Touch-Pads/-Screens, vorgesehen.

Das Touch-Pen-Element soll in einem Mehrfarb-Handschreibgerät mindestens eine übliche Farbstoff oder Farbpigment abgebende Schreibspitze ersetzten, wobei das Touch-Pen-Element zur Vermeidung von Beschädigungen der druckempfindlichen Flächen vorzugsweise aus einem abriebfesten, gut gleitenden Kunststoff mit einer abgerundeten Spitze besteht. Der Abrundungsradius der Druckspitze hängt von der Beschaffenheit, d.h. der Auflösung der druckempfindlichen Fläche ab. In seiner äußeren Ausbildung soll das Touch-Pen-Element im wesentlichen einer handelsüblichen Kugelschreibermine entsprechen.

Das Handschreibgerät ist dadurch gekennzeichnet, daß es ein handelsüblicher Wechselkugelschreiber oder Wechselstift mit mindestens zwei Minenhalterungen und insbsondere einem Drehwechsel- oder einem Schiebewechselmechanismus ist.

## Beschreibung

Die Neuerung betrifft ein Handschreibgerät mit mindestens zwei wechselweise einsatzbaren Schreibspitzen, von denen mindestens eine Schreibspitze die Spitze einer Farbstoff oder Farbpigment abgebenden Mine ist, nach dem Oberbegriff des Schutzanspruchs 1. Die Erfindung betrifft ferner ein Touch-Pen-Element mit einer Druckspitze, welches in solch ein Handschreibgerät einsetzbar ist.

In der Computertechnik haben sich jüngst Eingabeeinheiten eingeführt, die aus einer druckempfindlichen Fläche bestehen, auf der mit einer neutralen Schreibspitze, die weder Farbstoff noch Farbpigment abgibt und überdies auch eine gewisse Abriebfestigkeit aufweist, geschrieben oder gezeichnet werden kann, wobei die mit einem solchen Stift gezogenen Linien infolge der druckelektrischen Übertragung in gleicher Weise auf dem Bildschirm eines Computers wiedergegeben werden können. Eine solche neutrale Schreib- oder Druckspitze wird in der Fachsprache auch als Touch-Point bezeichnet, die drucksensible Computer-Eingabefläche auch als Touch-Pad.

Bekannt sind andererseits Handschreibgeräte mit zwei oder mehr Farbstoff bzw. Pigment abgebenden Schreibspitzen, die wechselweise zum Einsatz gebracht werden können. Hier ist der sogenannte Drehbleistift aufzuführen, bei dem durch Drehen in der Regel des Endes des Handschreibgerätes Bleistiftminen bzw. Farbminen mit unterschiedlicher Farbe zum Einsatz gebracht werden können. Es sind auch Ausführungen solcher Vier- oder Mehrfarbstifte bekannt, bei denen die gewünschten Schreibminen durch einen Schieber aus der Öffnung des Handschreibgerätes hinausgeschoben werden. wobei ein solcher Vorgang im allgemeinen ein federbewirktes Zurückziehen der zuvor im Einsatz befindlich gewesenen Mine bewirkt. Diese Ausführungen seit langem bekannter Mehrfarbstifte sind auch in den Kugelschreiberbereich übernommen worden. Dort gibt es beispielsweise Handschreibgeräte, bei denen man durch Drehen einer Kappe wahlweise zwei unterschiedliche Kugelschreiberminen in Einsatz bringen kann. Auch diese Mehrfarbkugelschreiber gibt es in Ausführungen mit beispielsweise vier verschiedenen Minen, die auch hier entweder durch Drehen einer Kappe oder durch individuelles Vorschieben wechselweise zum Einsatz gebracht werden können. Gegenüber dem Einzelkugelschreiber, der eine verhältnismäßig lange Mine enthält, sind für diese Mehrfarbkugelschreiber kürzere Minen mit einer Länge von 65 mm im Einsatz, die gegenüber den langen Minen in der Regel auch einen etwas geringeren Durchmesser haben, da für mehrere Minen in einem Schreibgerät begrenzten Durchmessers weniger Raum für die einzelne Mine zur Verfügung steht und die Minen im allgemeinen mit ihrem der Schreibspitze abgewandten Schaftende für einen Auswechselvorgang in eine im Schreibgerät vorhandene hülsenförmige Fassung eingeschoben werden, die das Minenende klemmend festhält.

Für jemand, der häufig mit einem Touch-Pad arbeitet, ist es oft lästig, zusätzlich zu einem üblichen Handschreibgerät auch noch einen Touch-Pen mitzuführen. Sein individuelles Handschreibgerät trägt man in der Regel bei sich, während der Touch-Pen nur bei der Computerarbeit erforderlich ist, und möglicherweise an einem nicht in Erinnerung behaltenen Ort abgelegt wurde, so daß er bei erneutem Bedarf am Computer nicht zur Verfügung steht.

Die Neuerung sieht daher ein Mehrfarb-Handschreibgerät nach dem Oberbegriff des Schutzanspruches 1 vor, bei dem mindestens eine übliche Farbstoff oder Farbpigment abgebende Schreibspitze durch eine nicht Farbstoff oder Farbpigment abgebende Druckspitze, nämlich einen sogenannten Touch-Point als Eingabemittel für eine drucksensible Computer-Eingabefläche, d.h. ein Touch-Pad ausgebildet ist.

Diese Druckspitze besteht vorzugsweise massiv aus Kunststoff, wobei diese Spitze nicht im Sinne des Wortes nadelartig spitz sein muß, sondern eher einen gewissen Abrundungsradius aufweist, damit das Touch-Pad nicht beschädigt wird. Wie groß der Abrundungsradius der Druckspitze ist, hängt davon ab, wie selektiv das Touch-Pad ist und wie fein die Linien sein können, die mit der Druckspitze auf ihm gezogen werden. Das Kunststoffmaterial der Druckspitze soll abriebfest sein, damit nicht Rückstände bei Abnutzung auf dem Touch-Pad verbleiben, andererseits soll der Kunststoff eine gewisse Gleiteigenschaft aufweisen, damit bei Relativbewegung der Druckspitze gegenüber der Touch-Padoberfläche keine zu große verschleißerzeugende Reibung erzeugt wird.

Vorzugsweise ist das neue Handschreibgerät auf der Basis eines Wechsel-Kugelschreibers ausgebildet, da Kugelschreiber heutzutage häufiger im Einsatz sind als Mehrfarbstifte. Dementsprechend ist vorzugsweise die Druckspitze Teil eines auswechselbaren Touch-Pen-Elementes, welches in seiner äußeren Ausbildung im wesentlichen einer Kugelschreibermine entspricht, wie sie als Auswechselmine für das entsprechende Schreibgerät vorgesehen ist. Hier kommt die Gestalt einer handelsüblichen genormten kurzen Kugelschreibermine mit einer Länge von 65 mm zum Einsatz.

Zumindest an seinen beiden Enden muß das auswechselbare Touch-Pen-Element so ausgebildet sein, daß es einerseits mit seiner Druckspitze zum Einsatz durch die vordere Öffnung des Schreibgerätes vorgeschoben werden kann, andererseits muß sein hinteres Ende einen Durchmesser aufweisen, mit dem es in die hülsenförmige Fassung des Schreibgerätes einschiebbar ist. Am vorderen Ende sollte dieser abgestimmte Durchmesser über eine Länge von mindestens etwa 1 cm gegeben sein, am hinteren Ende, welches in die Fassung eingeschoben wird, über eine Länge von etwa 1,5 cm. Die Durchmesser dieser beiden Enden sind in der Regel in etwa gleich und betragen für die angegebene kurze Kugelschreibermine etwa 2,3 mm. Der mittlere Bereich des Touch-Pen-Elemtnes zwischen den Enden kann einen anderen Durchmesser aufweisen. Erforderlichenfalls und je nach zur Verfügung stehendem Raum in dem Handschreibgerät macht man diesen mittleren Bereich im Durchmesser etwas größer, um die Widerstandsfähigkeit des Touch-Pen-Elementes gegen den Druck bei der Schreibarbeit zu erhöhen.

Wird ein genügend steifes Material verwendet, wählt man jedoch vorzugsweise ein Touch-Pen-Element, welches über seine gesamte Länge im wesentlichen den gleichen Durchmesser hat.

So kann das gesamte Touch-Pen-Element durchgehend massiv aus dem gleichen Kunststoffmaterial bestehen, aus dem seine Druckspitze besteht. Dies macht die Herstellung verhältnismäßig einfach, da man ein Stangenmaterial mit dem gewünschten Durchmesser verwenden kann, welches lediglich in bestimmte Stücke abgelenkt und an einem Ende mit der Konfiguration der Druckspitze versehen wird. Eine weitere Möglichkeit besteht beispielsweise aber auch darin, die Hülse einer Kugelschreibermine zu verwenden, bei der man die die Kugel enthaltende Spitze ein Stück abtrennt und eine Druckspitze aus Kunststoff in das so offene röhrenförmige Ende der abgeschnittenen Mine eindrückt. Durch einen Quetschvorgang kann die Druckspitze noch zusätzlich gesichert werden.

Beansprucht wird ausdrücklich ein Handschreibgerät, welches mit einem Touch-Pen-Element versehen ist, andererseits aber auch ein für den Einsatz in ein Handschreibgerät vorgesehenes Touch-Pen-Element, weil dieses als Austauschelement selbständiger Gegenstand des Handels sein kann.

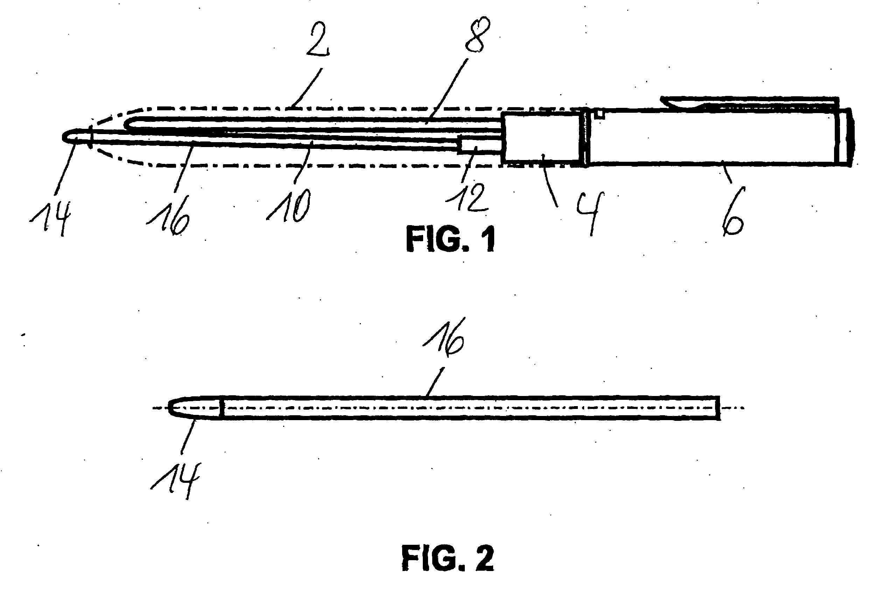

In der beigefügten Zeichnung sind in Fig. 1 eine beispielhafte Ausführung eines Handschreibgerätes mit Touch-Point und in Fig. 2 ein selbständiges Touch-Pen-Element dargestellt.

Bezug nehmend auf Fig. 1 ist hier ein Handschreibgerät in Form eines Zweifarb-Kugelschreibers dargestellt, bei dem der wechselseitige Einsatz der beiden Schreibspitzen durch Drehen der Kappe bewirkt werden kann. Das die Mine bzw. das Touch-Pen-Element umgebende vordere Hülsenelement 2 des Handschreibgerätes ist in der Darstellung entfernt und nur durch eine strichpunktierte Linie angedeutet. Es ist auf einen mittleren Abschnitt 4 des Handschreibgerätes aufsteckbar. Das hintere Ende 6 des Schreibgerätes ist gegenüber dem Abschnitt 4 und dem auf ihn aufgesteckten vorderen Hülsenteil 2 drehbar. Innerhalb der Abschnitte 4 und 6 befindet sich ein nicht dargestellter Drehmechanismus, durch den entweder eine übliche Kugelschreibermine 8 oder ein Touch-Pen-Element 10 vorgeschoben werden kann. In der Darstellung der Fig. 1 ist gerade das Touch-Pen-Element 10 vorgeschoben. Man sieht, daß es mit seinem hinteren Ende in eine Aufnahmehülse 12 eingesteckt ist. An seinem vorderen Ende ist das Touch-Pen-Element mit einer Druckspitze 14 versehen. Der dazwischenliegende Schaft 16 ist im Ausführungsbeispiel Teil einer Kugelschreibermine, in dessen abgeschnittenes vorderes Ende die Druckspitze 14 eingesetzt ist. Wie erkennbar ist, hat das Touch-Pen-Element 10 überall den gleichen Durchmesser.

Dieses Touch-Pen-Element ist in Fig. 2 einzeln dargestellt.

Die zeichnerische Darstellung zeigt nur eine beispielhafte mögliche Ausführungsform der Neuerung.

## Patentansprüche

1. Handschreibgerät mit mindestens zwei wechselweise einsetzbaren Schreibspitzen, von denen mindestens eine Schreibspitze die Spitze einer Farbstoff oder Farbpigment abgebenden Mine ist, dadurch gekennzeichnet, daß die oder eine weitere Schreibspitze (14) als eine nicht Farbstoff oder Farbpigment abgebende Druckspitze (Touch-Point) (14) als Eingabemittel für eine drucksensible Computer-Eingabefläche (Touch Pad) ausgebildet ist.

2. Handschreibgerät nach Anspruch 1, dadurch gekennzeichnet, daß die Druckspitze massiv aus einem insbesondere gleitfähigen und abriebfesten Kunststoffmaterial ausgebildet ist.

3. Handschreibgerät nach Anspruch 1 oder 2, dadurch gekennzeichnet, daß es ein handelsüblicher Wechselkugelschreiber oder Wechselstift mit mindestens zwei Minenhalterungen und insbesondere einem Drehwechselmechanismus oder einem Schiebewechselmechanismus ist. in dessen eine Minenhalterung (12) ein minenähnlicher Schaft (16) mit einer Druckspitze (14) (Touch-Pen-Element 10) eingesetzt ist,

4. Handschreibgerät nach Anspruch 3 in Form eines Wechselkugelschreibers, dadurch gekennzeichnet, daß das Touch-Pen-Element zumindest an seinem die Druckspitze aufweisenden Ende über eine Länge von etwa 1 cm einen Durchmesser aufweist, der etwas kleiner ist als der Innendurchmesser der Austrittsöffnung der Kugelschreiberhülse und an seinem der Druckspitze entgegengesetzten Ende über eine Länge von etwa 1,5 cm einen Durchmesser aufweist, der auf die Minenfassung des Kugelschreibers abgestimmt ist.

5. Handschreibgerät nach Anspruch 4, dadurch gekennzeichnet, daß der Durchmesser der beiden Enden des Touch-Pen-Elementes etwa 2,3 mm beträgt, entsprechend dem Durchmesser einer kurzen Kugelschreibermine mit einer Länge von 65 mm.

6. Handschreibgerät nach Anspruch 5, dadurch gekennzeichnet, daß der mittlere Bereich des Touch-Pen-Elementes einen von den Endbereichen abweichenden, insbesondere größeren Durchmesser aufweist.

7. Handschreibgerät nach Anspruch 4, dadurch gekennzeichnet, daß das Touch-Pen-Element (10) über seine gesamte Länge einen in etwa gleichen Durchmesser aufweist, insbesondere einen Durchmesser von etwa 2,3 mm entsprechend einer kurzen Kugelschreibermine von 65 mm Länge.

8. Handschreibgerät nach mindestens einem der Ansprüche 3 bis 7, dadurch gekennzeichnet, daß das Touch-Pen-Element massiv ausgebildet ist und insgesamt aus einem einheitlichen Kunststoffmaterial besteht.

9. Handschreibgerät nach Anspruch 7, dadurch gekennzeichnet, daß das Touch-Pen-Element (10) ein Rohr (16) ist, in Art einer Kugelschreibermine oder als tatsächlicher Abschnitt einer Kugelschreibermine, in dessen eines Ende eine Druckspitze (14) insbesondere aus Kunststoff eingesetzt ist.

10. Touch-Pen-Element mit einer Druckspitze (Touch-Point) als Eingabemittel für eine drucksensible Computer-Eingabefläche (Touch-Pad), dadurch gekennzeichnet, daß es eine Konfiguration, insbesondere einen Schaft (16) aufweist, mit dem es in ein handelsübliches, standardisiertes Handschreibgerät einsetzbar ist.

11. Touch-Pen-Element nach Anspruch 10 für einen Wechselkugelschreiber, dadurch gekennzeichnet, daß es zumindest an seinem die Druckspitze aufweisenden Ende über eine Länge von etwa 1 cm einen Durchmesser aufweist, der etwas kleiner ist als der Innendurchmesser der Austrittsöffnung der Kugelschreiberhülse, und an seinem der Druckspitze entgegengesetzten Ende über eine Länge von etwa 1,5 cm einen Durchmesser aufweist, der auf die Minenfassung des Kugelschreibers abgestimmt ist.

12. Touch-Pen-Element nach Anspruch 11, dadurch gekennzeichnet, daß der Durchmesser seiner beiden Enden etwa 2,3 mm beträgt, entsprechend dem Durchmesser einer kurzen Kugelschreibermine mit einer Länge von 65 mm.

13. Touch-Pen-Element nach Anspruch 12, dadurch gekennzeichnet, daß sein mittlerer Bereich einen von den Endbereichen abweisenden, insbesondere größeren Durchmesser aufweist.

14. Touch-Pen-Element nach Anspruch 11, dadurch gekennzeichnet, daß es über seine gesamte Länge einen in etwa gleichen Durchmesser aufweist, insbesondere einen Durchmesser von etwa 2,3 mm entsprechend einer kurzen Kugelschreibermine von 65 mm Länge.

15. Touch-Pen-Element nach mindestens einem der Ansprüche 10 bis 14, dadurch gekennzeichnet, daß es massiv ausgebildet ist und insgesamt aus einem einheitlichen Kunststoffmaterial besteht.

16. Touch-Pen-Element nach Anspruch 14, dadurch gekennzeichnet, daß es ein Rohr (16) ist, in Art einer Kugelschreibermine oder als tatsächlicher Abschnitt einer Kugelschreibermine, in dessen eines Ende eine Druckspitze (14), insbesondere aus Kunststoff eingesetzt ist.
